## Europäisches Patentamt
## European Patent Office
## Office européen des brevets

(19)

(11) Publication number: **0 010 357 B1**

(12) **EUROPEAN PATENT SPECIFICATION**

(45) Date of publication of patent specification: **18.01.84**

(51) Int. Cl.³: **F 16 K 1/22**

(21) Application number: **79301926.6**

(22) Date of filing: **18.09.79**

(54) **Butterfly valve.**

| | |
|---|---|
| (30) Priority: **19.10.78 US 952750**<br>**19.10.78 US 952751**<br>**19.10.78 US 952752** | (73) Proprietor: **GENERAL SIGNAL CORPORATION**<br>**PO Box 10010 High Ridge Park**<br>**Stamford Connecticut 06904 (US)** |
| (43) Date of publication of application:<br>**30.04.80 Bulletin 80/9** | (72) Inventor: **Barthelemy, Paul James**<br>**Route 2**<br>**Sauk Rapids Minnesota 56379 (US)**<br>Inventor: **Clausing, Dale Robert**<br>**517 First Street N.** |
| (45) Publication of the grant of the patent:<br>**18.01.84 Bulletin 84/3** | **Sartell Minnesota 56377 (US)**<br>Inventor: **Libke, Albert Warner**<br>**Route 1**<br>**Royalton Minnesota 56373 (US)**<br>Inventor: **Trott, Donald Ross**<br>**209 15th Avenue, S.** |
| (84) Designated Contracting States:<br>**BE CH DE FR GB IT NL SE** | **St. Cloud Minnesota 56301 (US)** |
| (56) References cited:<br>**DE - A - 1 775 900**<br>**DE - A - 2 332 151**<br>**DE - A - 2 811 482**<br>**DE - U - 1 876 810**<br>**GB - A - 407 010**<br>**US - A - 3 118 465**<br>**US - A - 3 233 861**<br>**US - A - 3 376 015**<br>**US - A - 3 667 726**<br>**US - A - 4 025 050** | (74) Representative: **Baillie, Iain Cameron et al,**<br>**c/o Ladas & Parry Isartorplatz 5**<br>**D-8000 München 2 (DE)** |

Courier Press, Leamington Spa, England.

## Butterfly valve

This invention relates to a butterfly valve comprising a housing formed as first and second sections in which is received a disc mounted on shaft means for rotation between open and closed positions, a valve seat formed of resiliently deformable material and bounding the disc to engage sealingly therewith in the closed position, the valve seat being affixed to a ring bounding the interior periphery of the housing and made of a material that is stronger and more rigid than the valve seat, said valve seat including a pair of flanges on the axial ends thereof and projecting radially outwardly, the ring being positioned between the flanges, the disc, the valve seat, the shaft means and the ring forming a unitary valve assembly.

Such a butterfly vavle is known from U.S. Patent Specification 4,025,050. In this prior butterfly valve, the usual valve disc seals against a resilient valve seat, and the seat is supported by a ring made of plastics resin which fits over a cooperating projection in the housing to locate the valve seat in the housing. The housing and hence the valve seat is in use clamped between flanges which may be provided on ducts to the valve.

It is desirable to be able to remove the outlet duct for servicing operations with the inlet duct pressurised and with the butterfly valve closed. The present invention provides for an improved butterfly valve construction in which, upon removal of the outlet duct for servicing, with the valve shut and the inlet duct pressurised, the valve seat will not blow out of the housing when unsupported by the flange of the outlet duct.

According to the invention the ring is spaced from the flanges creating grooves respectively on opposite sides of the ring, each of the housing sections including projections which mate with the grooves to hold the unitary assembly within the housing.

In order that the invention may be more fully understood an embodiment thereof will now be described by way of example with reference to the accompanying drawings wherein:

Figure 1 is a longitudinal cross-sectional view of a butterfly valve according to the invention;

Figure 1A is a top view of a retaining ring shown in Fig. 1;

Figure 2 is a longitudinal cross-section of the valve seat and bearing assembly of the butterfly valve shown in Figure 1;

Figure 2A shows a modified end structure on the ring illustrated in Figure 2;

Figure 3 shows a partial longitudinal cross sectional view of the valve seat and valve housing of the butterfly valve shown in Figure 1;

Figure 4 shows a plan view of the valve shaft of the butterfly valve shown in Figure 1;

Figure 5 shows a front view of the shaft shown in Figure 4;

Figure 6 shows an enlarged partial front view of the shaft shown in Figure 4;

Figure 7 shows a longitudinal cross-sectional view of the valve disc of the butterfly valve shown in Figure 1 as the shaft shown in Figure 4 is being inserted in;

Figures 8 and 9 show in schematic form the method of making the valve shaft of the present invention;

Figure 10 shows a portion of the butterfly valve including an alternate retaining ring;

Figure 11 shows a top view of the retaining ring shown in Figure 10.

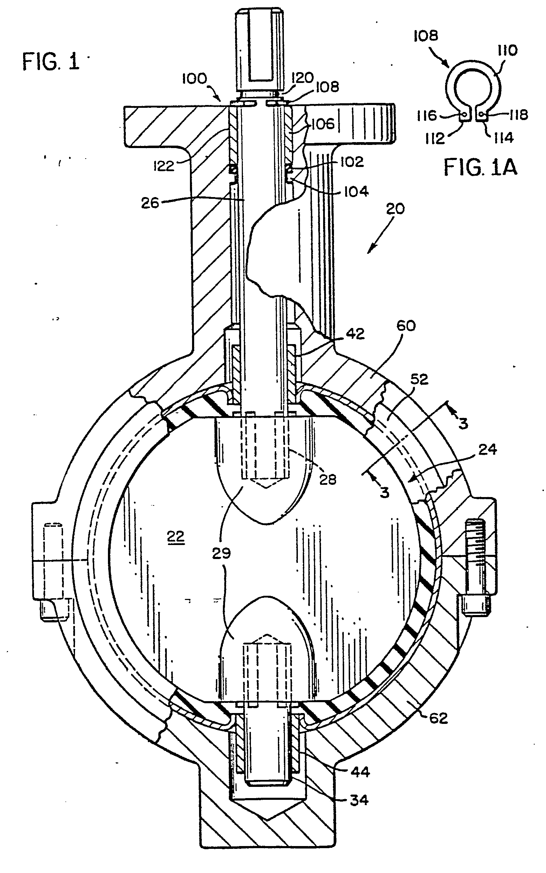

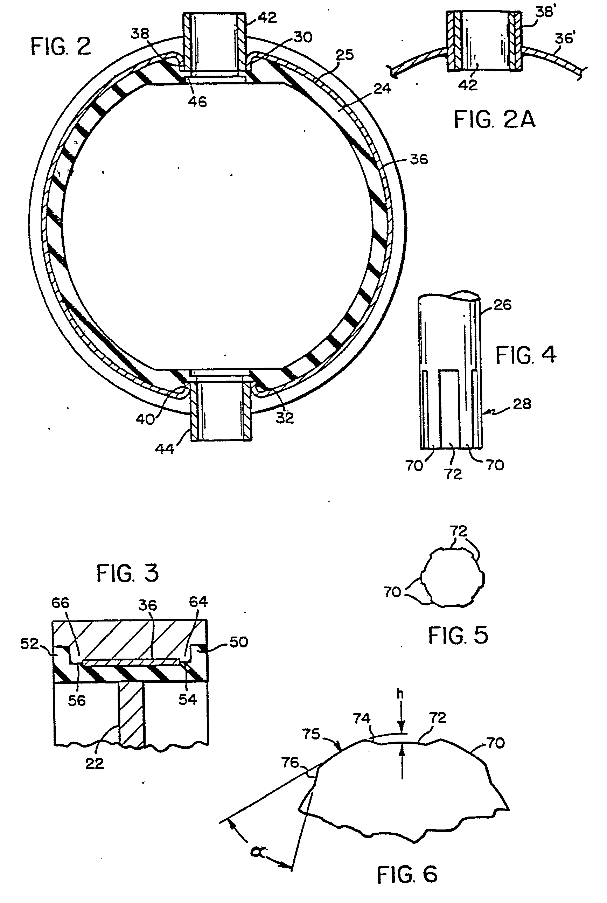

Figure 1 shows a butterfly valve 20 including a disc 22 adapted to be rotated between an open and a closed position. A valve seat 24 made of resilient material, preferably rubber, surrounds the disc 22 and is adapted to engage the disc when the valve is in the closed position. A shaft 26 has one end 28 affixed to the disc 22 at hub 29 and extends outwardly therefrom. The other end of shaft 26 is connected to an actuator of any desired type (not shown). As is best seen in Figure 2, the valve seat 24 includes an outer wall 25 having a pair of apertures 30 and 32 therein. The shaft 26 extends through the aperture 30 and a second shaft 34 is affixed to the bottom of disc 22 and extends outwardly therefrom through aperture 32. A ring 36, preferably made of steel, surrounds the outer wall 25 of valve seat 24 and is permanently affixed thereto, preferably by vulcanization, in order to prevent deformation of the outer wall of the valve seat. It is important that the ring 36 be made of a material that is much stronger and much more rigid than the valve seat 24. Preferably, ring 36 should be strong enough to support the rated pressure of the valve, even without the housing. The ring 36 further includes a pair of cylindrical lips 38 and 40, each defining an aperture in the ring. The cylindrical lips 38 and 40 are located snugly within the apertures 30 and 32, respectively. A cylindrical collar 42 surrounds the shaft 26 and is positioned within the cylindrical lip 38 in such a manner that the lip 38 supports the collar 42 and the collar 42 in turn provides a bearing surface for the shaft 26. Likewise, a cylindrical collar 44 surrounds the shaft 34 and is positioned within cylindrical lip 40 in such a manner that the lip 40 supports the collar 44 and the collar 44 in turn provides a bearing surface for the shaft 34.

It is a particularly useful feature of the butterfly valve that by inserting the collars 42 and 44 into the valve seat 24, the bearing surfaces provided for the shafts 26 and 34 respectively are positioned as close as possible to the disc 22. This has the greatly beneficial effect of reducing bearing loads by minimizing the moment between the shaft and the bearing. It has the additional beneficial effect of making it easy to align the bearings with the shaft. The collars 42 and 44 are also preferably vulcanized into the valve seat 24 to create a unitary structure with the valve seat 24 and the ring 36. The upper and lower apertures 30 and 32 in the outer wall of valve seat 24 includes a means for sealing the outward portion of the shaft 24 from the disc 22 whereby fluid is prevented from leaking along the shaft 26. This is accomplished by radially extending flange 46 extending inwardly from the walls of the aperture 30 near the top of the disc 22. The end of the cylindrical lip 38 and the end of the collar 42 abut the top surface of the flange 46, which has an inside diameter that is slightly smaller than the inside diameter of collars 42 and 44. The inner surface of the projection 46 contacts the shaft 26 above spline 70 to effectively seal the shaft 26 from the disc 22, due to radial compression of the elastomeric flange 46.

Referring to Figure 2A, there is shown a modified ring 36'. In situations where the bearing loads are increased, such as in larger butterfly valves, a cylindrical member 38' may be welded to ring 36'. The member 38' extends radially inwardly and outwardly of ring 36' for added support for collar 42.

As is best seen in Figure 3 the valve seat 24 includes a pair of flanges 50 and 52 on the axial ends thereof projecting radially outwardly from the outer wall 25. The ring 36 is positioned between the flanges 50 and 52 and spaced therefrom creating a pair of grooves 54 and 56, with one groove being on each side of the ring 36. At this point it should be apparent that the disc 22, the valve seat 24, the shafts 26 and 34, the ring 36, and the collars 42 and 44 form a unitary valve assembly or cartridge.

The butterfly valve 20 further includes a housing having an upper section 60 and a lower section 62. Each of the sections 60 and 62 includes a pair of projections 64 and 66 on the inner surface thereof for mating with the pair of grooves 54 and 56 respectively. The sections 60 and 62 are joined, preferably by bolting, and co-operate with the ring 36 and the outer wall 25 of the valve seat 24 to hold the unitary valve assembly within the housing. Thus, the butterfly valve of the present invention is provided with the important constructional feature of having a complete valve cartridge within the valve housing which may be removed easily for servicing or replacement. Additionally, since this valve cartridge includes a rigid retaining ring which co-operates with the valve housing, the valve may be utilized for dead-end service. This is so since even should the valve be in the closed position and the conduit downstream of the pressure be removed from connection to the valve 20, the valve cartridge of the present invention is sturdy enough to retain rated pressure without being deformed radially, or displaced axially because of the cooperation of ring 36 and projections 64 and 66.

As is shown in Figures 4 to 9 the butterfly valve 20 includes an improved connection between the shafts 26 and 34 and the disc 22. For simplicity the connection will be described with regard to shaft 26. The end 28 of shaft 26 which connects with disc 22 includes a plurality of splines 70 for securing the shaft 26 to the disc 22. The height of each of the splines 70 is defined as the space between a plane tangent to the outer surface of the spline 70 and a plane parallel to the aforementioned plane and tangent to the imaginary continuation of the grooves 72 interspersed between splines 70. This is illustrated as "h" in Figure 6. It is significant that this dimension "h" be no more than 0.76 mm (0.030 inch). This figure is derived by adding the maximum interference between the splines and the hub, 0.64 mm (0.025 inch), plus approximately 0.13 mm (0.005 inch) for tolerances. Should the interference exceed 0.64 mm (0.025 inch), the cutting stresses during shaft installation become unacceptable. While a clearance between groove 72 and hole 88 is not required, it is desirable to vent gas that may be trapped in cavity 78. Clearance between bore 88 and the surface 72 provides for venting of air. The interference between the splines and the hub is preferably 0.28 mm (0.011 inch) and the tolerance is preferably 0.08 mm (0.003 inch). The clearance is preferably 0.13 mm (0.005 inch). Each of the splines 70 includes a cylindrical top surface portion 75 and two side walls 74 and 76 extending therefrom toward the body of the shaft at an angle with respect to the plane tangent to the top surface portion at the centre thereof. This angle, illustrated as $\alpha$ in Figure 6, is between 30 and 60 degrees and is preferably 45 degrees. The reasons for the above dimensional constraints are that it is important to minimize the amount of material removed from the disc 22 during the process of inserting the shaft 26 while at the same time attaining a strong joint. Additionally, it is important not to place undue stress on the disc 22 during this operation. Preferably the hub has a stress of less than 1379 bar (20,000 p.s.i.).

Since there will be some removal of material during the insertion of shafts 26 and 34 into disc 22, it is important that the disc 22 be provided with internal cavities 78 and 80 for receiving any material removed from the interior of the disc during the process of joining the shafts to the disc. Since the shafts 26 and 34 must cut into the disc 22 it is imperative that these shafts have a hardness greater than the hardness of the disc 22. It has been found that the minimum difference between the hardness of the shaft and the hardness of the disc should be approximately 5 on the Rockwell C scale, with the shaft being the harder material. For example, the shaft may be made out of steel having a Rockwell C hardness greater than 33 and the disc may be made of cast iron having a Rockwell C hardness less than 27. It is also preferable that the length of the splines is approximately one and one-half times the diameter of the shaft and the width of the splines is approximately one-quarter to approximately one-third the diamter of the shaft. For example, a shaft one-half inch in diameter could have six splines, each 4.01 mm (0.158 inch) wide and approximately 19 mm (three-quarters of an inch) long. Thus, the circumference of the shaft will determine the number of splines there are.

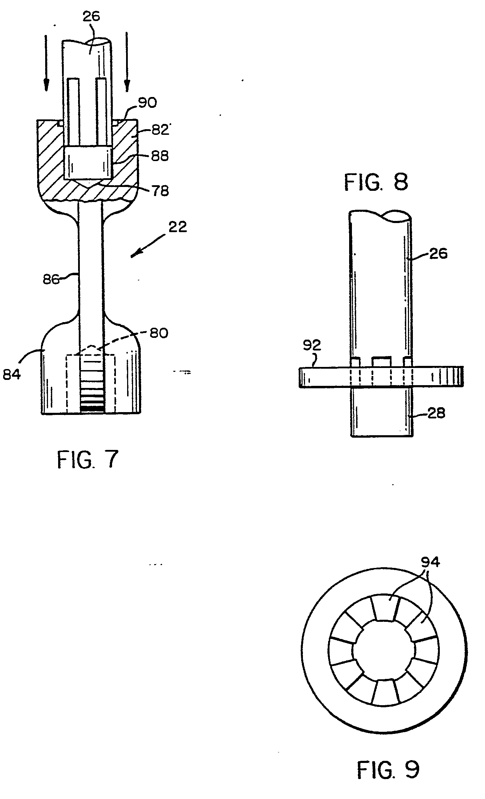

As is most apparent from Figure 7 the present valve is of the stub shaft type and thus valve disc 22 is formed with hub portions 82 and 84 having increased thickness relative to the main portion 86 of the disc. The portions of increased thickness 82 and 84 are adjacent the circumference of the disc 22. In smaller valve sizes (such as less than approximately 75 mm or 3 inches) the hubs may run together into one continuous cylindrical surface. The method of joining the shafts to the disc will be described only with respect to shaft 26. it being understood that the same process applies to shaft 34. A hole 88 is drilled in the portion 82 of disc 22. The hole 88 has a diameter which is smaller than the diameter of the shaft 26, but larger than the shaft surface diameter 72 to provide clearance. A slightly larger hole 90 is drilled as a pilot hole to facilitate the insertion of the shaft 26, and to allow for the "start" area of the splines, after the shaft is installed. As is shown in Figures 8 and 9 splines are formed on the end 28 of shaft 26 by cutting tool 92. The cutting tool 92 includes a plurality of cutting elements 94 for cutting grooves in the shaft 26. The shaft 26 is then pressed into hole 88, as is illustrated in Figure 7 thereby utilizing the splines 70 to cut grooves in the side walls of the hole 88 to form a permanent joint between the shaft and the disc. The resultant connection exceeds the torque transmitting capability of the shaft 26 and the strength of the disc 22.

At the other end of shaft 26, there is provided a unique bearing retainer assembly 100. As is best seen in Figure 1, assembly 100 includes an elastomeric "O" ring 102 compressed radially between shaft 26 and cylindrical bore 122, with bearing 106 and shoulder 104 forming the walls of an "O" ring groove. "O" ring 102 and bearing 106 may be made of any suitable material such as rubber and bronze, respectively. In order to ensure that fluid leaking along shaft 26 does not eject bearing 106 and cause personal injury or property damage, a retaining ring 108 is provided, abutting bearing 106. Referring to Figure 1A, retaining ring 108 including a split ring portion 110, engaging shaft 26, having ends 112 and 114. Each of ends 112 and 114 includes a hole 116 and 118, respectively. These holes may be used in assembling and disassembling retaining ring 108 on shaft 26. By merely inserting projections into the holes, retaining ring may be opened and closed. The retaining ring may be made of any suitable material, such as carbon spring steel (SAE 1060—1090). The retaining ring exerts a frictional hold against axial displacement. Should fluid pressure become sufficient to eject bearing 106, the frictional grip of retaining ring 108 on shaft 26 will stop axial movement of bearing 106, because the shaft 26 is firmly retained in the valve disc 22 as described earlier.

It may be desirable, as an added precaution, to provide an annular groove 120 in shaft 26 adjacent to retaining ring 108. In this case, even if a sudden high leakage pressure were sufficient to slide retaining ring 108 along shaft 26, retaining ring 108 (being sprung) would seat itself in groove 120 which prevents further axial movement of the retaining ring. The width of the groove should be at least slightly wider than the width of the retaining ring so that the retaining ring will easily fall into the groove. For example, the groove should be at least approximately 0.76 mm (0.030 inch) wider than the retaining ring.

It is significant that the groove be spaced axially from the retaining ring. Since the groove is formed prior to assembly, it would be difficult to estimate the precise location of the retaining ring. By spacing the groove from the retaining ring the manufacturing process is simplified.

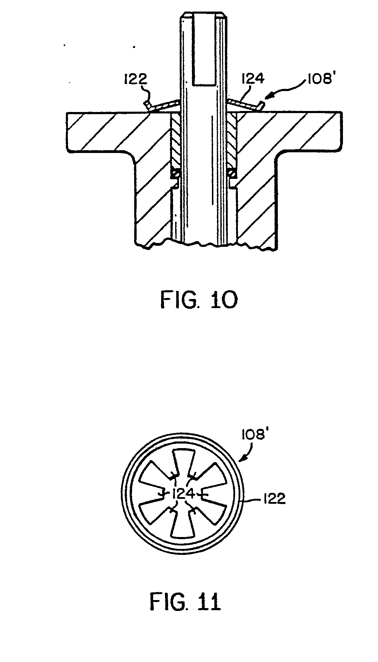

Referring to Figures 10 and 11, there is shown a modified retaining ring 108'. In many cases, such as with small butterfly valves, it may be sufficient to use a retaining ring such as the one illustrated in Figures 10 and 11. This retaining ring 108' includes a circumferentially extending portion 122 with a plurality of radially extending fingers 124. Retaining ring 108' may be slid over shaft 26 with relative ease since radially extending fingers 124 extend axially away from the direction of travel of the retaining ring as it is installed on shaft 26. Retaining ring 108' may be made of any suitable material, such as carbon spring steel. While it has not been illustrated in Figure 10, it may be desirable to include an annular groove on shaft 26 similar to the one that is used with respect to retaining ring 108.

Should fluid pressure become sufficient to eject bearing 106, the frictional grip of retaining ring 108' on shaft 26 will be increased by the force of bearing 106 on the back of fingers 124 to stop ejection of bearing 108.

## Claims

1. A butterfly valve comprising a housing formed as first and second sections (60, 62) in which is received a disc (22) mounted on shaft means (26, 34) for rotation between open and closed positions, a valve seat (24) formed of resiliently deformable material and bounding said disc (22) to engage sealingly therewith in the closed position, the valve seat (24) being affixed to a ring (36) bounding the interior periphery of the housing and made of a material that is stronger and more rigid than the valve seat (24), said valve seat including a pair of flanges (50, 52) on the axial ends thereof and projecting radially outwardly, the ring (24) being positioned between the flanges, the disc (22), the valve seat (24), the shaft means (26, 34) and the ring (36) forming a unitary valve assembly, characterised in that said ring (24) is spaced from the flanges (50, 52) creating grooves (54, 56) respectively on opposite sides of the ring, each of the housing sections (60, 62) including projections (64, 66) which mate with said grooves to hold said unitary valve assembly within the housing.

2. A butterfly valve according to claim 1 wherein the valve seat (24) includes apertures (30, 32) which receive said shaft means (26, 34), the ring (36) including lips (38, 40) around the apertures (30, 32), and sleeves (42, 44) supported by the lips (38, 40) and providing bearings for the shaft means.

3. A butterfly valve according to claim 2 wherein the valve seat (24) includes annular flanges (46) sealingly engaging the shaft means (26, 34).

4. A butterfly valve according to claim 2 or 3 wherein the lips comprise cylindrical members (38') welded to the ring (36').

5. A butterfly valve according to any preceding claim wherein said shaft means comprise stub shafts (26, 34) received in respective hubs (29, 82, 84) on the valve disc (22), the ends of the shafts (26, 34) being formed with splines (70 and being push fitted into bores (88) in the hubs (29).

6. A butterfly valve according to any preceding claim wherein said shaft means (26) extends out of the housing (60, 62), a bearing (122) supporting the shaft means where it extends out of the housing, a retaining ring (108) frictionally engaging the shaft means (26) and abutting said bearing (122) to prevent fluid pressure from ejecting the bearing from the housing.

7. A butterfly valve according to claim 6 including a groove (120) in said shaft means (26) to receive said retaining ring (108) if said fluid pressure moves the ring (108) along the shaft.

**Revendications**

1. Vanne à papillon comportant un boîtier constitué par une première et une seconde sections (60, 62) dans lesquelles un disque (22) monté sur des moyens en forme d'arbre (26, 34) est logé de manière à pouvoir être entraîné en rotation entre des positions ouverte et fermée, un siège de vanne (24) constitué en un matériau élastiquement déformable et entourant ledit disque (22) de manière à contacter de façon étanche ce dernier, dans la position fermée, le siège de vanne (24) étant fixé à un anneau (36) recouvrant le pourtour intérieur du boîtier et constitué en un matériau qui est plus résistant et qui est plus rigide que le siège de vanne (24), ledit siège de vanne comportant un couple de collerettes (50, 52) situées sur ses extrémités axiales et faisant saillie radialement vers l'extérieur, l'anneau (36) étant disposé entre les collerettes, tandis que le disque (22), le siège de vanne (24), le dispositif en forme d'arbre (26, 34) et l'anneau (36) constituent un ensemble de vanne unitaire, caractérisée en ce que ledit anneau (36) est distant des collerettes (50, 52), ce qui crée des gorges (54, 56) sur des côtés respectivement opposés de l'anneau, chacune des sections (60, 62) du boîtier comportant des parties saillantes (64, 66) qui sont adaptées auxdites gorges de manière à maintenir ledit ensemble de valve unitaire dans le boîtier.

2. Vanne à papillon selon la revendication 1, dans laquelle le siège de vanne (24) comporte des ouvertures (30, 32) qui logent lesdits moyens en forme d'arbre (26, 34), l'anneau (36) comportant des rebords (38, 40) situés autour des ouvertures (30, 32) et des manchons (42, 44) portés par les rebords (38, 40) et fournissant des paliers pour des moyens en forme d'arbre.

3. Vanne à papillon selon la revendication 2, dans laquelle le siège de vanne (24) comporte des collerettes annulaires (46) contactant de façon étanche les moyens en forme d'arbre (26, 34).

4. Vanne à papillon selon la revendication 2 ou 3, dans laquelle des rebords sont constitués par des organes cylindriques (38') soudés à l'anneau (36').

5. Vanne à papillon selon l'une quelconque des revendications précédentes, dans lequel lesdits moyens en forme d'arbre sont constitués par des bout d'arbres (26, 34) logés dans des moyeux respectifs (29, 82, 84) sur le disque de vanne (22), les extrémités des arbres (26, 34) comportant des cannelures (66) et étant emmanchées à force dans des alésages (88) ménagés dans les moyeux (29).

6. Vanne à papillon selon l'une quelconque des revendications précédentes, dans laquelle ledit moyen en forme d'arbre (26) s'étend hors du boîtier (60, 62), un palier (122) supportant le moyen en forme d'arbre à l'endroit où il sort du boîtier, tandis qu'une bague de retenue (108) contacte avec frottement le moyen en forme d'arbre (26) et est en butée contre ledit palier (122) de manière à empêcher l'éjection du palier hors du boîtier sous pression d'un fluide.

7. Vanne à papillon selon la revendication 6, comportant une gorge (120) ménagée dans ledit moyen en forme d'arbre (26) pour loger ladite bague de retenue (108) si ladite pression de fluide déplace la bague (108) le long de l'arbre.

**Patentansprüche**

1. Drehklappe mit einem Gehäuse (60, 62), das aus einem ersten und einem zweiten Teil (60, 62) besteht und in dem auf einer Wellenanordnung (26, 34) ein Scheibe (22) montiert ist, die zwischen einer Offen- und einer Schließstellung drehbar ist, und mit einem aus elastisch verformbaren Werkstoff bestehenden Ventilsitz (24), der die Bewegung der Scheibe (22) derart begrenzt, daß sie in der Schließstellung dichtend an ihm anliegt, wobei der Ventilsitz (24) an einem Ring (36) befestigt ist, der an den Innenumfang des Gehäuses angrenzt und aus einem Werkstoff besteht, der fester und starrer ist als der Ventilsitz (24), wobei der Ventilsitz an seinen axialen Enden ein Paar von radial auswärts vorstehenden Flanschen (50, 52) besitzt, zwischen denen der Ring (36) angeordnet ist, und die Scheibe (22), der Ventilsitz (24), die Wellenanordnung (26, 34) und der Ring (36) eine einheitliche Ventilbaugruppe bilden, dadurch gekennzeichnet, daß der Ring (36) unter Bildung von auf entgegengesetzten Seiten des Ringes angeordneten Nuten (54, 56) im Abstand von den Flanschen (50, 52) angeordnet ist und jeder der Gehäuseteile (60, 62) Vorsprünge (64, 66) besitzt, die passend in die Nuten eingreifen, um die einheitliche Ventilbaugruppe in dem Gehäuse zu halten.

2. Drehklappe nach Anspruch 1, dadurch gekennzeichnet, daß der Ventilsitz (24) Durchbrüche (30, 32) hat, welche die Wellenanordnung (26, 34) aufnehmen und daß der Ring (36) Lippen (38, 40) besitzt, welche die Durchbrüche (30, 32) umgeben, und von den Lippen (38, 40) getragene Hülsen (42, 44), die Lager für die Wellenanordnung bilden.

3. Drehklappe nach Anspruch 2, dadurch gekennzeichnet, daß der Ventilsitz (24) Ringflansche (46) besitzt, die dicht an der Wellenanordnung (26, 34) angreifen.

4. Drehklappe nach Anspruch 2 oder 3, dadurch gekennzeichnet, daß die Lippen zylindrische Elemente (38') aufweisen, die an dem Ring (36') angeschweißt sind.

5. Drehklappe nach einem der vorhergehenden Ansprüche, dadurch gekennzeichnet, daß die Wellenanordnung Wellenstummel (26, 34) aufweist, die in je einer Nabe (29, 82, 84) der Klappenscheibe (22) eingreifen, und daß die Wellenstummel (26, 34) an ihren Enden mit Keilnuten (70) ausgebildet und im Schiebesitz in Bohrungen (88) der Naben (29) angeordnet sind.

6. Drehklappe nach einem der vorhergehenden Ansprüche, dadurch gekennzeichnet, daß sich die Wellenanordnung (26) aus dem Gehäuse (60, 62) heraus erstreckt und an der Stelle, an der sie sich aus dem Gehäuse heraus erstreckt, von einem Lager (122) abgestützt ist, und daß ein Haltering (108) an der Wellenanordnung (26) reibungsschlüssig angreift und an dem Lager (122) angreift, um zum verhindern, daß ein Druckmitteldruck das Lager aus dem Gehäuse herausdrückt.

7. Drehklappe nach Anspruch 6, dadurch gekennzeichnet, daß die Wellenanordnung (26) mit einer Nut (120) ausgebildet ist, die den Haltering (108) aufnimmt, wenn der Druckmitteldruck den Ring (108) längs der Wellenanordnung bewegt.

0 010 357

FIG. 1

FIG. 1A

0 010 357

FIG. 2

38
42
30
25
24
46
36

FIG. 2A

38'
36'
42

FIG. 4

26
28
70 72 70

40
32
44

FIG. 3

66 36 64
52 50
56 54
22

FIG. 5

72
70

FIG. 6

h
74 72
75 70
76
α

2

FIG. 7

FIG. 8

FIG. 9

FIG. 10

FIG. 11